Europäisches Patentamt

European Patent Office

Office européen des brevets

(11) Publication number: **0 241 604 B1**

# EUROPEAN PATENT SPECIFICATION

(45) Date of publication of patent specification: **24.06.92**

(51) Int. Cl.⁵: **H04M 3/00**, H04M 19/00, H04Q 1/38

(21) Application number: **86202326.4**

(22) Date of filing: **18.12.86**

(54) **Polarity reversal circuit.**

(30) Priority: **20.12.85 BE 2060895**

(43) Date of publication of application:
**21.10.87 Bulletin 87/43**

(45) Publication of the grant of the patent:
**24.06.92 Bulletin 92/26**

(84) Designated Contracting States:
**FR GB IT**

(56) References cited:
**BE-A- 898 051**

**IEEE JOURNAL OF SOLID-STATE CIRCUITS, vol. SC-18, no. 3, June 1983, pages 316-324, IEEE, New York, US; J.M. DANNEELS et al.: "Monolithic 70V bipolar linedriver IC for PCM SLIC"**

(73) Proprietor: **ALCATEL N.V.**
**Strawinskylaan 537 (World Trade Center)**
**NL-1077 XX Amsterdam(NL)**

(84) Designated Contracting States:
**FR GB IT**

(72) Inventor: **Pieters, Jozef Frank Pharida**
**Noendries 4**
**B-9000 Gent(BE)**
Inventor: **Willocx, Eddy Louis Marie**
**Breendonkstraat 194**
**B-2660 Willebroek(BE)**

(74) Representative: **Vermeersch, Robert et al**
**BELL TELEPHONE MANUFACTURING COM-PANY Naamloze Vennootschap Patent De-partment Francis Wellesplein 1**
**B-2018 Antwerpen(BE)**

## Description

The present invention relates to a polarity reversal circuit for reversing the polarity of first and second line conductors of a telecommunication line, said circuit including a reference circuit having at least one reference control output which is coupled through controlled gating means to at least one signal output of said polarity reversal circuit, said signal output being coupled to said telecommunication line, means being provided to generate a reference voltage through forwardly biased transistor base-emitter junctions.

Such a circuit is already known from Belgian patent No 898051. In this known circuit the gating means include a differential amplifier having a common bias circuit controlled from the reference output, inputs connected to a signal source through respective field effect transistors, and an output connected to a signal output of the polarity reversal circuit. The latter output is constituted by the tapping point of a resistive voltage divider one terminal of which is connected to an input of an operational amplifier whose output is connected to a line conductor and to the other terminal of which the reference voltage is connected through the forwardly biased transistor base-emitter junctions. The voltage drops over these junctions have for effect that the voltage at the above other terminal is substantially independent from transistor base-emitter junction voltage drops.

A drawback of this known polarity reversal circuit is that field effect transistors have poor matching characteristics. More particularly they may have different threshold voltages and these may adversely affect the accuracy of operation of the differential amplifier.

Belgian patent 901837 discloses a polarity reversal circuit wherein the use of such field effect transistors is avoided. In this known circuit the gating means include a differential amplifier with first and second transistor stages whose emitters are connected in common to the reference circuit and whose collectors constitute circuit outputs which are further connected to a predetermined common voltage through first and second resistances respectively. The gates of the transistor stages are coupled to a further predetermined voltage through individual resistances. The reference circuit is able to sink a reference current from the predetermined common voltage through at least one of the first and second resistances in order to realise a wanted voltage at the corresponding circuit output(s). Because the base currents of the transistor stages are not known exactly and not always identical, the known circuit has not always an optimum accuracy as far as the circuit output voltage is concerned.

An object of the present invention is to provide a polarity reversal circuit of the above type, but having an improved accuracy.

According to the invention this object is achieved due to the fact that said reference voltage is produced on said reference output which is coupled to said signal output through said forwardly biased transistor base-emitter junctions of bipolar transistors in series with a compensation resistance, the value of a predetermined constant current flowing through said resistance and the resistance value being selected such that the resulting voltage drop in said resistance compensates the voltage drops in said junctions to produce at said signal output an output voltage exactly equal to said reference voltage.

Thus the drawbacks of both the above prior art circuits are avoided.

The above mentioned and other objects and features of the invention will become more apparent and the invention itself will be best understood by referring to the following description of an embodiment taken in conjunction with the accompanying drawings wherein:

Fig. 1 shows a telecommunication circuit with a Subscriber Line Interface circuit (SLIC) including a polarity reversal circuit according to the invention;

Fig. 2 and 3 together represent this polarity reversal circuit in more detail.

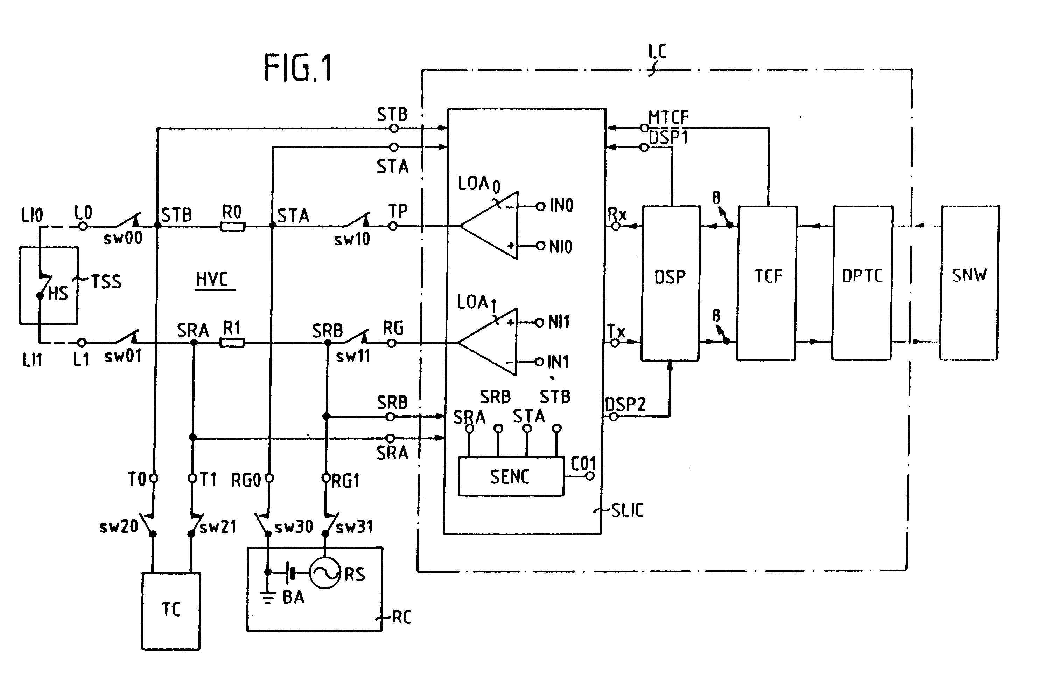

The telecommunicaiton circuit shown in Fig. 1 includes a line circuit LC which is connected in cascade with a switch circuit HVC between a telecommunication line with conductors LI0 and LI1, connected to a subset TSS, and a switching network SNW. LC, HVC and SNW are located in a telecommunication exchange. Line circuit LC includes the cascade connection of a SLIC, a Digital Signal Processor DSP, a TransCoder and Filter circuit TCF and a Dual Processor Terminal Controller DPTC.

Subset TSS includes a normally open hook switch HS connected between the line conductors L10 and L11.

Switch circuit HVC is for instance of the type disclosed in Belgian patent No. 897 772. It includes 4 pairs of bidirecitonal switches sw00, sw01 to sw30, sw31 as shown and has line terminals L0 and L1 connected to line conductors LI0 and LI1 respectively, test terminals T0 and T1 connected to a test circuit TC, ringing terminals RG0 and RG1 connected to a ringing circuit RC, tip and ring terminals TP and RG connected to the like named outputs of line amplifiers LOA0 and LOA1 in the SLIC respectively and terminals STA, STB, SRA, SRB connected to like named terminals of a sensing circuit SENC in the SLIC. In HVC the line terminals L0/L1 are connected to TP/RG via the series connection of sw00/01, 50 ohms line feed resistors R0/1 and sw10/11 respectively. The respective junction points STB and SRA of sw00 and R0 and of sw01 and R1 are connected to TC via sw20 and sw21 respectively, whilst the respective junction points STA and SRB of R0 and sw10 and of R1 and sw11 are connected to RC via sw30 and sw31 respectively. As shown for a switched through connection, series switches sw00, sw01, sw10 and sw11 are closed, whereas the other shunt switches are open. All the switches are controlled by the SLIC so that HVC is able to establish either one of the following connections : between TSS and SLIC (LOA0, LOA1 and SENC); TC and TSS; SLIC (LOA0, LOA1 and TC; RC and TSS; RC and SLIC (SENC). The function of TC is to test the connection to TSS and to the SLIC and that of RC is to apply a ringing signal to this line and to SENC in the SLIC. For instance, RC is able to connect ground through sw30 and the negative battery BA of -48 or -60 Volts in series with a ringing source RS of 90 Volts RMS through sw31.

The Subscriber Line Interface Circuit SLIC which is integrated on a chip is a two-wire bidirectional circuit on the side of TSS and a four-wire one towards SNW. It has a speech receive input terminal Rx (with ground return) and a speech transmit output Tx (again with ground return), Rx and Tx being connected to DSP. The SLIC further has a 12 kHz or 16 kHz metering signal input terminal MTCF connected to TCF, data input and output terminals DSP1 and DSP2 connected to DSP and the above mentioned terminals STA, STB, SRA, SRB, TP and RG connected to HVC. The sensing circuit SENC included in the SLIC is of the type disclosed in European patent application No. 85200774.9 and provides at its output a composite DC/AC voltage, considered with respect to VAG which is for instance equal to $\frac{ri}{2}$

wherein r = R0 = R1 and i is the line current comprising a DC component and possibly an AC component constituted by a speech signal and/or a metering signal.

The digital signal processor DSP converts a digital speech signal received from TCF into an analog speech signal which is then applied to the speech receive terminal Rx of the SLIC. Conversely it converts an analog speech signal received via the speech transmit terminal Tx of the SLIC into a digital version which is applied to TCF. DSP also includes an echo canceller circuit.

The following drive bits are transmitted by DSP to data input terminal DSP1 of the SLIC:
- BR0 and BR1 : polarity reversal bits indicating that the polarity on RG and on TP has to be made high (1) or low (0) according to the following table :

| BR0 | BR1 | TP | RG | Condition |
|-----|-----|-----|-----|-----------|
| 0 | 0/1 | 1 | 0 | normal condition |
| 1 | 0 | 0 | 1 | reversal condition |
| 1 | 1 | 0 | 0 | ground signalling condition |

This last condition is called ground signalling condition because it allows signalling in TSS on each of the line conductors by applying a ground thereon. Indeed, because TP and RG are at a low voltage current is able to flow from ground towards the line circuit;
- FR : a feed characteristic bit indicating that the synthesized line feed resistance should be high ohmic (0) or low ohmic (1). The meaning of synthesized feed resistance will be explained later;
- CT0 and CT1 : current limit bits to indicate four possible maximum line current conditions;
- BV : a battery bit indicating that the exchange battery V- is -48 Volts (0) or -60 Volts (1);
- SMPI : a metering signal bit indicating that a metering signal applied to SLIC by TCF has to be allowed in the SLIC (1) or not (0);
- RNG : a ringing bit indicating that ringing is to be performed (1) or not (0);
- BPW : a power bit indicating that the SLIC should be put in the power up mode (1) or not (0);
- HB : a high bias bit indicating that the SLIC should be put in a high bias mode (1) or not (0);
- RY0, RY1, RY2 : three relay drive bits indicating that a corresponding one of the relays (not shown) having the above mentioned contacts sw00 to sw31 should be operated (1) or not (0).

Finally, the DSP also receives on its data input terminal DSP2 control data bits transmitted by the SLIC. These bits are the same as those transmitted to DSP1 except that the four bits FR, RNG, CT0 and CT1 are respectively replaced by :
- SHD : a switch hook detection bit indicating that the line loop between SLIC and TSS is open (0) or closed (1);
- RT : a ring trip indicating that the ringing signal applied to line by the circuit RC has to be switched off (1) or not (0);
- OC : an overcurrent or overtemperature bit indicating that the temperature of LOA0 and/or LOA1 is above (1) or below (0) a predetermined value;

- VPB : a bit indicating that ground detection has to be performed on the line conductors (1) or not (0). In the present case VPB is always 0.

The TCF performs a transcoding operation on digital signals received from the DSP and the DPTC and is also adapted to supply a metering signal MTCF to the SLIC. These operations are described in the Belgian patents 897 771 and 897 773.

Finally, the DPTC performs the general control of the SLIC. Details of this circuit are described in the Belgian patents 898 959 and 898 960.

To be noted that whereas HVC, SLIC and DSP are individually associated to the telephone line, the circuits TCF and DSP are provided in common for a number of such lines, e.g. 8 lines, as indicated by the multipling arrows.

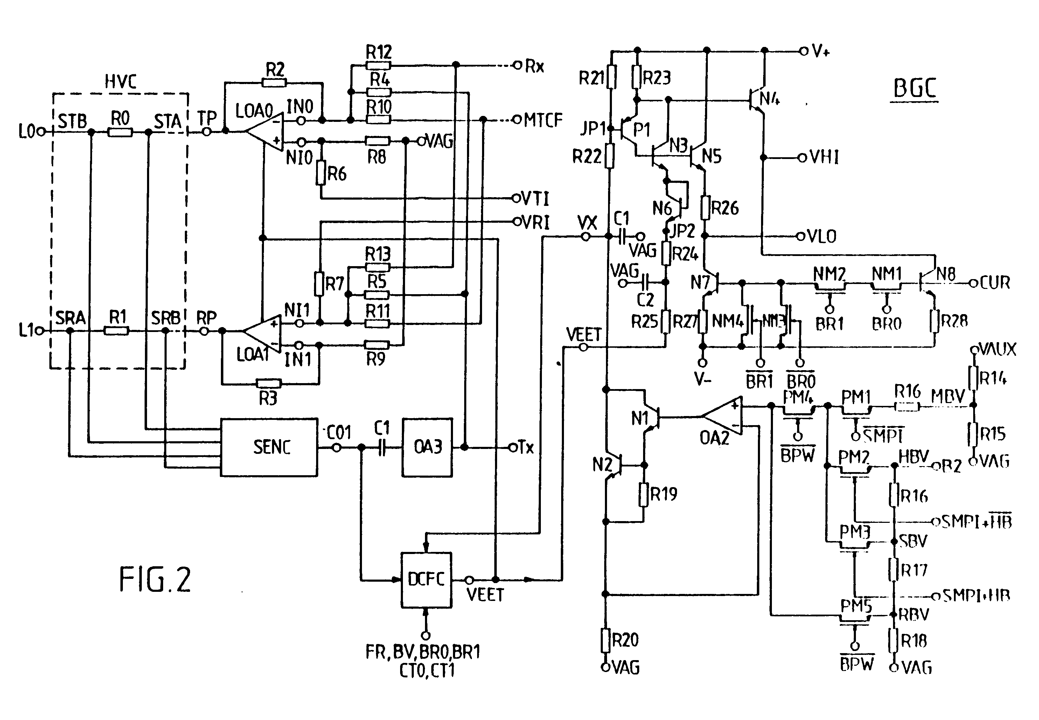

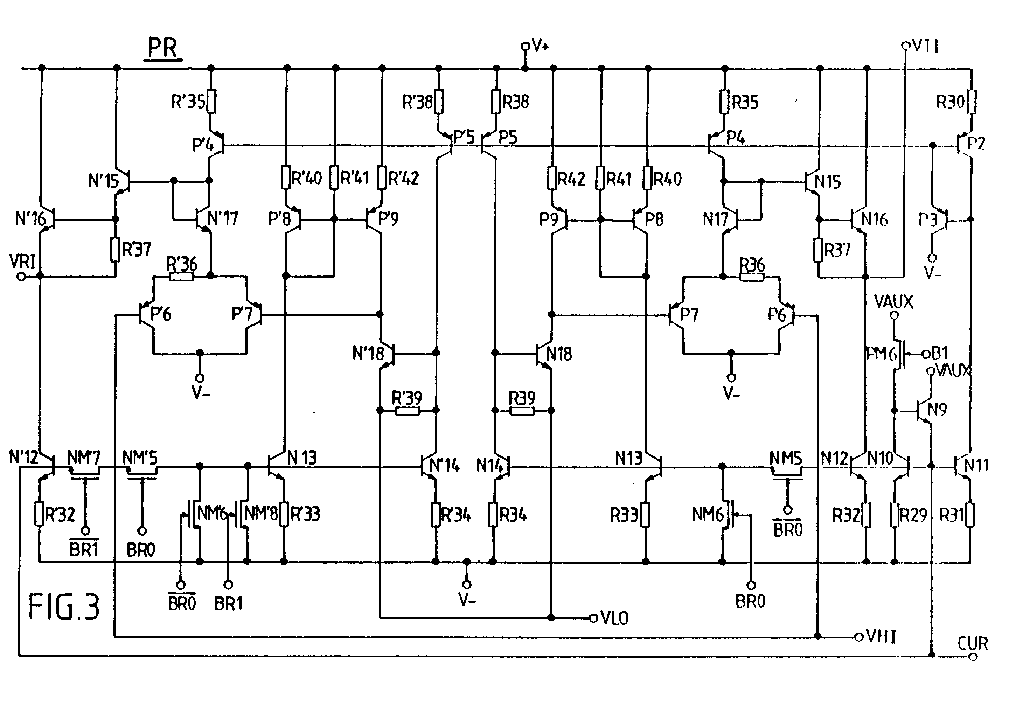

Reference is now made to Figs. 2 and 3 representing the polarity reversal circuit of Fig. 1 in more detail. This circuit operates with the following voltages :

V+ which is at 0 Volts or ground potential;

V- which is equal to -48 or -60 Volts e.g. -48 Volts;

VAUX which is an auxiliary voltage 15 Volts above V-, e.g. -33 Volts;

VAG which is voltage half-way between V- and VAUX, i.e. substantially equal to 7.5 Volts above V-, e.g. -40.5 Volts;

VEET which is a regulating voltage;

B1 which is a continuously applied constant voltage equal to about 3 Volts below VAUX;

B2 which is a so called bandgap reference voltage, e.g. equal to 2.41 Volts above VAG.

As shown in Fig. 2 the output CO1 of the sensing circuit SENC is connected to the inputs VEET of both LOA0 and LOA1, which have respective feedback resistances R2 and R3, through a DC feedback circuit DCFC which together with the amplifiers LOA0 and LOA1, the feed resistances R0 and R1 and the sensing circuit SENC constitutes a resistance synthesis circuit, i.e. a circuit to convert the value of each of the feed resistances R0 and R1 into a wanted resistance value. The output CO1 of the sensing circuit SENC is also connected via a DC blocking capacitor C1 in series with an amplifier stage OA3 including an operational amplifier, on the one hand to the inverting input INO of LOA0 via resistance R4 and, on the other hand, to the non-inverting input NI1 of LOA1 through resistance R5 equal to R4. The amplifiers LOA0 and LOA1, the resistances R0 and R1, the sensing circuit SENC, the amplifier stage OA3 and the resistances R4 and R5 constitute an AC impedance synthesis circuit able to convert the resistance value of R0 and R1 into a wanted AC impedance.

The non-inverting inputs NI0 of LOA0 and NI1 of LOA1 are connected through equal resistances R6 and R7 to the respective outputs VTI and VRI of a polarity reversal circuit PRC which as will be described later is able to apply a DC supply voltage V+ minus x to VTI and a DC voltage VEET plus x to VRI or vice-versa or even VEET plus x to both VTI and VRI. As explained later the voltage x is chosen in function of the magnitude of the speech signal and the metering signal and/or of one or more of the drive bits SMPI, HB, BPW. The PRC also provides at its output VX a voltage equal to V+ minus 2x which is applied to the DC feedback circuit DCFC.

The non-inverting input NI0 of LOA0 and the inverting input IN1 of LOA1 are connected to VAG through respective equal bias resistances R8 and R9. The above mentioned outputs MTCF of TCF and Rx of DSP are coupled to the inverting input IN0 of LOA0 and to the non-inverting input NI1 of LOA1 via not shown means (indicating by dashed lines) and respective resistances R10, R11 and R12, R13. R10 and R12 are equal to R11 and R13 respectively. Finally, the output of the amplifier stage OA3 is also coupled via not shown means (also indicted by a dashed line) to the transmit output Tx. The not shown means are without importance for understanding the invention and are for instance of the type disclosed in the above mentioned European patent application.

The above mentioned DC feedback circuit DCFC is described in the copending patent application of even date entitled "Telecommunication line circuit and amplifier circuit used therein". It has the following terminals :

- an input connected to the output CO1 of the sensing circuit SENC;
- an input connected to the output VX of the polarity reversal circuit PRC;
- inputs FR, BV, BRO, BR1, CT0 and CT1 controlled by the above mentioned like named drive bits;
- an output VEET connected to the polarity reversal circuit PRC and to the like named inputs of both the line amplifiers LOA0 and LOA1. On this output DCFC generates the regulating voltage VEET.

The polarity reversal circuit PRC includes a bias generation circuit BGC (Fig. 2) and a polarity reversal circuit proper PR (Fig. 3). It generates at its output VX a voltage equal to V+ - 2x and is adapted to apply voltages V+ - x and VEET + x to VTI and VRI respectively or to VRI and VTI respectively or to apply the voltage VEET + x to both VTI and VRI.

The bias generation circuit BGC includes an operational amplifier OA2 to the non-inverting input of which the following bias voltages are able to be selectively connected :

- MBV : a metering bias voltage which is generated at the tapping point of a voltage divider constituted by resistances R14 and R15 connected between VAUX and VAG. These resistances are chosen in function of the magnitude of the metering signal to be applied to the line and may be easily replaced as they are external to the SLIC chip. In this way, the use of a peak detector such as disclosed in Belgian Patent No. 898051 for detecting the peak of the metering signals supplied to the circuit is avoided. It has been found that such a peak detecting produces noise which appears on the line as it influences the voltages applied thereat via PR and DCFC;
- HBV : a high bias voltage which is equal to the above mentioned bandgap reference voltage B2 connected to VAG via resistances R16, R17 and R18 in series so as to form a voltage divider;
- SBV : a speech bias voltage which is generated at the junction point of the resistances R16 and R17;
- RBV : a reduced bias voltage which is produced at the junction point of the resistances R17 and R18.

The voltages MBV, HBV and SBV are connected to the non-inverting input of amplifier OA2 via respective ones of the individual PNOS transistors PM1, PM2 and PM3 and a common PMOS transistor PM4, whereas the voltage RBV is connected to this input through PMOS transistor PM5. The transistors PM1, PM2, PM3, PM4 and PM5 are controlled by drive bit $\overline{\text{SMPI}}$, Boolean function SMPI + $\overline{\text{HB}}$, Boolean function SMPI + HB, drive bit $\overline{\text{BPW}}$ and drive bit BPW respectively.

From this control it follows that :

- in the power up mode (BPW = 1) the voltages MBV, HBV and SBV may be applied to OA2 according to the following table in the case of metering bias, high bias and speech bias respectively. These cases are characterized by the following values of the bits SMPI and HB :

| SMPI | HB | Voltage |
|------|-----|---------|
| 1 | 0/1 | MBV |
| 0 | 1 | HBV |
| 0 | 0 | SBV |

- in the power down mode (BPW = 0) the reduced bias voltage RBV is applied to amplifier OA2.

As will become clear later the selected one of the bias voltages MBV, HBV, SBV and RBV produces a corresponding value of the above mentioned voltage x. Because these bias voltages are derived from the low voltage B2 having a value equal to 2.41 Volts above VAG or from MBV having a value situated between VAUX and VAG respectively, the various transistors used may be of the low voltage type. Such transistors have the advantage of occupying a relatively small surface on the chip.

In order to refer the selected bias voltage with respect to V+ and VEET, the bias voltage is transformed first into a current and then again in a voltage in the following circuit.

The output of amplifier OA2 is connected to its inverting input via the Darlington pair comprising NPN transistors N1 and N2 and bias resistance R19. The emitter of transistor N1 and the base of transistor N2 are joined and connected to the emitter of the latter transistor N2 through resistance R19. The junction point of N2 and R19 is connected to VAG via resistance R20, whilst V+ is connected to the joined collectors of N1 and N2 through resistances R21 and R22 in series.

Because of the presence of the amplifier OA2 the voltage at the non-inverting input thereof is available at the upper end of resistance R20 due to which a current, say I, flows from V+ to VAG mainly through resistances R21 and R22, transistor N2 and resistance R20. As a consequence and when R21 = R22 the voltages at the junction point JP1 and R21 and R22 and at the lower end VX of resistance R22 are respectively equal to V+ - x and V+ - 2x , with x = R21.I = R22.I. The latter voltage V+ - 2x is applied to the circuit DCFC. A capacitance C1 connected to VAG is connected to the output VX. Together with the resistances R21 and R22 this capacitance C1 forms a filter circuit.

The junction point JP1 of resistances R21 and R22 is connected to the base of PNP transistor P1 which together with NPN transistor N3 forms a common emitter - common collector pair. The supply voltage V+ is connected through resistance R23 to the command emitter of P1, collector of N3 and base of NPN transistor N4 whose collector is connected to V+. The collector of P1 is connected to the bases of NPN transistors N3 and N5 and the emitter of N3 is connected to input VEET via the series connection of diode connected NPN transistor N6 and resistances R24 and R25. The junction point of N6 and R24 is designated JP2 and the junction point of R24 and R25 is connected to VAG via capacitance C2 which forms together with resistances R24 and R25 another filter circuit. The emitters of transistors N4 and N5 constitute the outputs VHI and VLO of the circuit BGC respectively. This circuit further includes NPN transistors N7 and N8 whose emitters are connected to V-via resistances R27 and R28 respectively. The collector of N8 is connected to the junction point of the emitter of N4 and output VHI and the collector of N7 is connected to the junction point of transistors N18 and N'18 in the circuit PR. Transistor N8 is a current mirror transistor coupled to a continuously operated current source - to be considered later - so that a constant current flows in its collector. Its base which constituted an input CUR of BGC is connected to the base of transistor N7 via the series connected NMOS transistors NM1 and NM2 the gates of which are controlled by the drive bits BR0 and BR1 respectively. The base of transistor N7 is also connected to V- via NMOS transistors NM3 and NM4 which are controlled by the bits $\overline{BR0}$ and $\overline{BR1}$ respectively.

The circuit just described operates as follows. Hereby the VBE of a transistor, say N or P, is indicated by V(N or P).

In the above mentioned normal and reversal polarity conditions for which at least one of the drive bit BR0 and BR1 is equal to 0, current mirror transistor N7 is blocked because its base is then connected to V- through NM3 or/and NM4, so that no current is derived to V- from the output of PR at the junction point of N18 and N'18. When the above mentioned current I flows from V + to V- through resistances R21, R22, transistor N2 and resistance R20, also both transistors P1 and N3 are conductive and a current, say I1, flows from V + to V- via resistance R23, mainly through transistor N3, diode connected transistor N6 and resistances R24 and R25 in series. Consequently, the voltage VHI produced at the output VHI of the circuit BGC is equal to

$$VHI = V + - x + V(P1) - V(N4) \qquad (1)$$

On the other hand, the voltage produced at the output VLO of BGC is equal to

$$VLO = VEET + (R24 + R25) I1 + V(N6) + V(N3) - V(N5) \qquad (2)$$

When supposing that R24 + R25 = R23 and because

$$x = R23.I1 + V(P1) \qquad (3)$$

the relation (2) may be written

$$VLO = VEET + x + V(N3) + V(N6) - V(P1) - V(N5) \qquad (4)$$

In the case bits BRO and BR1 are both equal to 1, i.e. in the ground signalling condition, the base of transistor N8 is connected to that of transistor N7 through transistors NM1 and NM2 which are then both conductive. As a consquence current then flows from the junction point N18 and N'18 in PR to V- via transistor N7 and resistance R27 in series. The reason for this will be explained later.

When the bias voltage applied to the non-inverting input of amplifier OA2 is changed the values of the above mentioned current I and I1 also change so that a voltage change will occur at the outputs VX, VHI and VLO and will be reflected on the line. Indeed, VX controls the circuit DCFC which produces VEET applied to the line amplifiers LOA0 and LOA1 which are also controlled from VHI and VLO via the circuit PR. However, due to the presence of the filter circuit R21, R22, C1, these voltage variations are smooth so that they are prevented from producing audible clicks on the line. On the other hand, the filter circuit R24, R25, C2 removes noise and other spurious signals from VEET, so that these are also prevented from appearing on the line.

The polarity reversal circuit proper PR includes a continuously operated current source comprising PMOS transistor PM6 controlled by constant voltage B1, NPN transistors N9 and N10 and resistance R29. More particularly, the supply voltage VAUX is connected to V-via the source-to-drain path of PM6, the collector-to-emitter path of N10 and resistance R29 in series. The collector and base of N10 are interconnected via the base-to-emitter junction of transistor N9 whose collector is connected to VAUX. The base of constant current source transistor N10 is connected to the base of current mirror NPN transistor N11 and V + is connected to V- via resistance R30, the emitter-to-collector paths of PNP transistor P2 and NPN transistor N11, and resistance R31 in series. The base and collector of P2 are interconnected via the emitter-to-base junction of PNP transistor P3 whose collector is connected to V-. By this current source/current mirror circuit the constant current, say I2, produced is mirrored in the collector of transistor N8 of BGC and in first and second parts of PRC. The latter circuit parts are similar and differ only in the fact that the first (right hand part of Fig. 3) is controlled by drive bit BR0 and the complement thereof, whereas the second (left hand part of Fig. 3) is controlled by drive bits BR0 and BR1 and the complement thereof. Only the first circuit is considered hereinafter.

The above constant current I2 is more particularly mirrored in the collectors of NPN transistors N8, N11, N12 and also of NPN transistors N13 and N14 if drive big BRO = 0, i.e. in case NMOS transistor NM5 interconnecting the base of N12 and N13 is conductive, whereas NMOS transistor NM6 connecting the bases of N13 and N14 to V-is blocked. Otherwise this connection is interrupted and N13 and N14 are in blocked condition. The emitters of transistors N11 to N14 are connected to V- via respective resistances R31 to R34. A constant current is also mirrored in the collectors of PNP transistor P2, P4 and P5. The transistors N8, N11, N13, N14, P2, P4, P5 and their associated circuitry are so dimensioned that the currents flowing therein are equal to : $\frac{I2}{3}$ for N8;

$$\frac{2\,I2}{3}$$

for N11, N13, P2, P4, P5;

$$\frac{10\,I2}{3}$$

for N12; and

$$\frac{6\,I2}{3}$$

for N14. In a practical example I2 = 30 micro-Amperes.

The supply voltage V + is connected to V- through the series connection of resistance R35, the emitter-to-collector path of transistor P4, the collector-to-emitter path of diode connected NPN transistor N17 and, on the one hand resistance R36 in series with the emitter-to-colletter path of PNP transistor P6 and, on the other hand, the emitter-to-collector path of PNP transistor P7. The base of P6 is directly controlled from the output VHI of BGC and the junction point of the collectors of transistors P4 and N17 is connected to the output VTI of the circuit PR through the base-to-emitter junctions of NPN transistors N15 and N16. V + is connected to the collectors of these transistors and the joined emitter of N15 and base of N16 are interconnected via bias resistance R37. N15, N16, R37 form a Darlington pair.

The supply voltage V + is also connected to the collector of transistor N14 via the series connection of resistance R38 and the emitter-to-collector path of transistor P5. The junction point of the collectors of transistors P5 and N14 is connected to the base of NPN transistor N18 whose emitter is connected to the output VLO of BGC via resistance R26 as well as to its base through resistance R39. V + is connected to the junction point of the collector of transistor N18 and the base of transistor P7 via a current source/current mirror arrangement comprising diode connected transistor P8, PNP transistor P9 and resistances R40, R41 and R42, the collector and base of P8 being joined to the collector of transistor N13. The latter transistors and associated circuitry are so dimensioned that the currents flowing through through P8 and P9 are equal to

$$\frac{2\,I2}{3}$$

and $\frac{I2}{3}$ respectively or to 20 and 10 micro-Amperes when I2 = 30 micro-Amperes.

The above mentioned second circuit part of the polarity reversal circuit proper PR differs from the just described first part in that the bases of transistors N'12 and N'13 are interconnected via the series connection of NMOS transistors NM'5 and NM'7 and that the interconnected bases of transistor N'13 and

7

N'14 are connected to V- via NMOS transistors NM'6 and NM'8 in parallel. Transistors NM'5, NM'6, NM'7 and NM'8 are controlled by drive bits BRO, $\overline{BR0}$, $\overline{BR1}$ and BR1 respectively.

As will become clear, each of the above described first and second circuit parts of PR may be considered as including a gating means P6, P7; P'6, P'7, whose inputs are controlled from VHI directly and from VLO indirectly through transistors switch N18; N'18 which is itself controlled from current source P5 and transistor switch N14. P7, P'7 is also controlled from current source P9, P'9 which is itself controlled from transistor switch N13, N'13.

The circuit just described operates as follows in the normal, reversal and ground signalling conditions which are characterized by BR0 = 0; BR0 = 1 and BR1 = 0 and BR0 = BR1 = 1 respectively, as already mentioned above.

Normal condition (BR0 = 0)

In this case transistors NM5 and NM'6 are conductive, whereas transistors NM6 and NM'5 are blocked so that the bases of transistor switches N8, N10, N11, N12, N'12 are connected to those of transistor switch N13 and N14 which are then no longer inhibited, whereas transistors N'13 and N'14 are prevented from being operated and therefore block transistors P'8 and P'9.

Because transistor N14 is conductive the current 2I2/3 provided by conductive transistor P5 is derived from the base of transistor N18 which is therefore prevented from being operated. The same is true for transistor P7 of the gating means P6, P7. On the contrary, transistor P6 of this gating means becomes conductive due to the voltage VHI being applied to its base. As a consequence the latter voltage VHI is applied to the output VTI of PR via P6, R16, R17, N15 and N16 so that voltage appearing at this output VTI is given by

$$VTI = VHI + V(P6) + V(R36) + V(N17) - V(N15) - V(N16) \qquad (5)$$

wherein V(R36) is the voltage drop in resistance R36.

Taking the relation (1) into account the relation (5) becomes

$$VTI = V + -x + V(P1) + V(P6) + V(N17) - V(N4) - V(N15) - V(N16) + V(R36) \qquad (6)$$

By means of resistance R36 through which the constant current provided by transistor P4 flows the voltage VTI is so adjusted that the relation (6) becomes

$$VTI = V + -x \qquad (7)$$

It should be noted that because current mirror transistor P9 is conductive it charges all spurious capacitances of transistors P7 which will thus be able to be rapidly rendered conductive in case of a polarity reversal wherein a voltage VEET + x has to be applied to output VTI.

Because transistor N'14 is not conductive it derives no current, provided by transistor P'5, from the base of transistor N'18. As a consequence the latter transistor N'18 is saturated by this the current so that the voltage VLO which is applied to the emitter of transistor N'18 substantially appears at the collector thereof.

Although the voltage VHI on the output VHI is also present on the base of transistor P'6, only transistor, the emitter-to-base junction of transistor P6' being subjected to a reverse voltage equal to VHI - VLO - V- (P'7) but this has no adverse effect on this transistor because it is for instance realised in high voltage BIMOS technology and able to withstand as much as 100 Volts. Because the voltage at the base of transistor P'7 is substantially equal to VLO - V(R26) the voltage

$$VRI = VLO - V(R26) + V(P'7) + V(N'17) - V(N'15) - V(N'16) \qquad (8)$$

is supplied to the output VRI of the circuit PR. Taking the relation (4) into account the relation (8) becomes

$$VRI = VEET + V(N3) + VN(6) + V(N'17) + V(P'7) - V(P1) - V(N5) - V(N'15) - V(N'16) - V(R26) \qquad (9)$$

By means of the resistance R26 through which the constant current 2 I2/3 flows the voltage VRI is so adjusted that the various VBE's are compensated so that the relation (9) becomes

$$VRI = VEET + x \qquad (10)$$

8

From the above it follows that in the condition BR0 = 0 voltages V + -x and VEET + x are generated at the outputs VTI and VRI respectively.

It is clear from the above that the output voltages VTI and VRI are derived from the reference voltages V + -x and VEET + x by adding VBE voltages thereto or subtracting VBE voltages therefrom and that any residual error voltage is cancelled by the voltage drop of a constant current in a resistor.

As mentioned above, in the case under consideration, transistor N13 is conductive. As a consequence, also transistors P8 and P9 are conductive and because transistor N18 is blocked the current generated by transistor P9 is fed to the base of transistor P7. In this way, if transistor P7 was previously conductive (in the reversal condition where the voltage VTI is then equal to VEET + x) it is now rapidly blocked so that the voltage VTI may rapidly become equal to V + -x. This means that the current source P9 is switched on by transistor N13 in case of a polarity reversal from the reversal condition to the normal condition. Otherwise, it remains switched off because transistor N13 is then blocked, as explained hereinafter.

Reversal condition (BR0 = 1 and BR1 = 0)

In this case transistors NM5, NM′6 and NM′8 are blocked, whereas transistors NM6, NM′5 and NM′7 are conductive so that more particularly the base of transistor N′12 is then connected to the bases of transistors N′13 and N′14 which are then no longer inhibited, whereas transistors N13 and N14 are prevented from being operated and therefore block transistors P8, P9 and N18. In an analogous way as described above for the normal condition, it may be shown that for the reversal condition the above voltages V + - x and VEET + x are supplied to the outputs VRI and VTI respectively.

Ground signalling condition (BR0 = BR1 = 1)

In this case transistors NM5 and NM′7 are blocked, whereas transistors NM6 and NM′8 are conductive so that the bases of transistors N12 and N13 as well as of N′12 and N′13 are not interconnected. In the bias generation circuit BGC transistors NM1 and NM2 are conductive, whereas transistors NM3 and NM4 are blocked. As a consequence also transistor N7 is conductive, this transistor and associated circuitry being so determined that the current flowing through it is equal to

$$\frac{6I2}{3}.$$

Indeed, the current is constituted by constant current

$$\frac{2I2}{3}$$

generated by transistor P5 and P′5 and flowing through the base-to-emitter junctions of N18 (shunted by R39) and N′18 (shunted by R′39) respectively and which is now derived to V- via transitor N7 and resistance R27 in series and also by the current

$$\frac{2I2}{3}$$

flowing from N5 to V- via R26, N7 and R27 in serie. As a consequence transistors N18 and N′18 are both saturated so that the voltage VLO - V(R26) is applied to the bases of transistors P7 and P′7. In an analogous way as described it may be shown that the voltage VEET + x is then generated on both the outputs VTI and VRI.

It should be noted that the higher voltage VHI of the two voltages VHI and VLO is directly applied to transistor P6, whereas the lower voltage VLO - V(R26) is indirectly applied to P7 through transistor N18. This is done in order that the voltage in the commoned emitters of P6 and P7 (without considering R36) would be able to be made equal to VHI + (V(P6) or VLO - V(R26) + V(P7). Indeed, in the present case when VLO - V(R26) is not applied to P7 then the common emitter voltage is VHI + V(P6), whereas when VLO - V(R26) is applied to P7 then the commoned emitter voltage is VLO - (VR26) + V(P7) and P6 is blocked. If for instance VLO - V(R26) were directly applied to transistor P7 and VHI were indirectly applied to transistor P6 then it would be impossible to make the common emitter voltage equal to VHI + V(P6).

In the above described circuit the regulating resistances R36 and R'36 are individually provided in the emitter branches of transistors P6 and P'6 respectively, whereas the regulating resistance R26 is provided in common for transistors N18 and N'18 associated to P7 and P'7 respectively. This is done because the currents through the regulating resistances R26, R36, R'36 are known and because R36 and R'36 cannot be replaced by a single one since the current in the path leading from the output VHI of BGC to PR is not a constant.

It should also be noted that instead of using PNP transistors for P6 and P7, it is also possible to make use of NPN transistors for P6 and P7, but in this case P6 has to be directly controlled from VLO whereas P7 has to be indirectly controlled from VHI. Also P9 has then to be so connected that it blocks P7 rapidly in case of a polarity reversal from the normal to reversal condition.

**Claims**

1.  Polarity reversal circuit for reversing the polarity of first (LI0) and second (LI1) line conductors of a telecommunication line, said circuit including a reference circuit having at least one reference control output (JP1, JP2) which is coupled through controlled gating means to at least one signal output (VTI, VRI) of said polarity reversal circuit, said signal output being coupled to said telecommunication line, means being provided to generate a reference voltage (V + - x, VEET + x) through forwardly biased transistor base-emitter junctions (P1, N4, P6, N17, N15, N16; N6, N3, N5, P7, N17, N15, N16), characterized in that said reference voltage (V + - x, VEET + x) is produced on said reference output (JP1, JP2), which is coupled to said signal output (VTI, VRI) through said forwardly biased transistor base-emitter junctions (P1, N4, P6, N17, N15, N16; N6, N3, N5, P7, N17, N15, N16) of bipolar transistors in series with a compensation resistance, the value of a predetermined constant current flowing through said resistance and the resistance value being selected such that the resulting voltage drop in said resistance compensates the voltage drops in said junctions to produce at said signal output an output voltage exactly equal to said reference voltage.

2.  Polarity reversal circuit according to claim 1, characterized in that it includes current means producing a constant current in said compensation resistance (R26, R36).

3.  Polarity reversal circuit according to claim 1, characterized in that said reference circuit has first (JPI) and second (JP2) reference outputs on which respective first (V + - x) and second (VEET + x) reference voltages are produced and which are coupled through a respective first (P1, N4) and second (N6, N3, N5) set of said forwardly biased junctions to respective first (VHI) and second (VLO) intermediate terminals on which first (VHI) and second (VLO) intermediate voltages are produced respectively and which are coupled to first and second inputs of said gating means havig said polarity circuit output (VTI, VRI), said gating means first and second inputs being coupled to said signal output through a respective third (P6, N17, N15, N16) and fourth set (P7, N17, N15, N16) of said forwardly biased junctions.

4.  Polarity reversal circuit according to claim 3, characterized in that it includes first (P6, P7) and second (P'6, P'7) gating means having first (VTI) and second (VRI) signal outputs coupled to said first (LI0) and second (LI1) line conductors respectively.

5.  Polarity reversal circuit acording to claim 3, characterized in that said gating means include first (P6) and second (P7) transistors whose bases constitute said gating means first and second inputs respectively and whose emitter-to-collector paths are coupled between said signal output (VTI, VRI) and a supply voltage (V-) in series with a common part (N17, N15, N16) of said third (P6, N17, N15, N16) and fourth (P7, N17, N15, N16) sets of forwardly biased junctions.

6.  Polarity reversal circuit according to claim 5, characterized in that said first (VHI) and second (VLO) intermediate terminals are coupled to said gating means first input diretly and to said gating means second input via a controlled first transistor switch (N18) respectively, such that when said first transistor switch (N18) is made conductive by control means said first transistor (P6) is blocked and said second transistor (P7) is conductive (VLO) thereby conneting said second intermediate voltage to said signal output (VTI, VRI), whereas when said first transistor switch (N18) is blocked by said control means said first transistor (P6) is conductive thereby connecting said first intermediate voltage (VHI) to said signal output.

7. Polarity reversal circuit according to claim 6, characterized in that, said first transistor switch is constituted by a third transistor (N18) whose collector-to-emitter path is coupled between said gating means second input and said second intermediate output (VLO) and whose base is coupled to the junction point of a first constant current source (P5) and a controlled second transistor switch (N14) which when operated by said control means prevents the operation of said third transistor (N18) and when blocked by said control means permits said third transistor (N18) to be saturated by said first current source (P5), said third transistor then applying said second intermediate voltage (VLO) to said gating means second input.

8. Polarity reversal circuit according to claim 7, characterized in that the emitter and base of said third transistor (N18) are interconnected by a resistance (R39).

9. Polarity reversal circuit according to claim 7, characterized in that said second transistor switch is constituted by a controlled second current source (N14).

10. Polarity reversal circuit according to claims 2 and 5, characterized in that a first said compensation resistance (R36) is connected in series with an individual part of said third set of forwardly biased diodes, a constant current being supplied to said first compensation resistance (R36) through a third constant current source (P4) which constitutes said current means.

11. Polarity reversal circuit according to claim 10, characterized in that said third constant current source (P4) is coupled to the emitter-to-collector paths of said first (P6) and second (P7) transistors through a diode connected transistor (N17), the junction point of said third constant current source (P4) and said diode connected transistor (N17) being connected to said circuit output (VTI) through a Darlington amplifier (N15, N16).

12. Polarity reversal circuit according to claim 7, characterized in that a second said compensation resistance (R26) is connected in series with the collector-to-emitter path of said third transistor (N18).

13. Polarity reversal circuit according to claims 4 and 12, characterized in that second compensation resistance (R26) is common to said first (P6, P7) and second (P'6, P'7) gating means.

14. Polarity reversal circuit according to claim 7, characterized in that the base of said second transistor (P7) is connected to the junction point of a fourth constant current source (P9) and a controlled third transistor switch (N13) which operated and blocked together with said second transistor switch (N14) by said control means when a first predermined line condition (reversal condition) has to be realised.

15. Polarity reversal circuit according to claim 1, characterized in that said reference circuit includes a resistive voltage divider (R20, R21, R22) which is coupled with bias selection means (OA2) ensuring the flow of a selected current therethrough, a second resistance (R21) of said voltage divider being shunted by the series connection of a third resistance (R23) and the emitter-to-base junction of a fourth transistor (P1), to the base of which said first reference voltage (V + - x) is applied, and that the junction point of said second resistance (R21) and said emitter-to-base junction of said fourth transistor (P1) is coupled to said second intermediate output (VLO) through the base-to-emitter junction of a fifth transistor (N4) whose collector-to-emitter path is connected to a supply voltage (V-) through a fourth transistor switch (N8) which is continuously operated by said control means.

16. Polarity reversal circuit according to claims 4 and 15, characterized in that the junction point of the collector-to-emitter paths of said third transistors (N18, N'18) of said first and second gating means are coupled to a supply voltage (V-) through a fifth transistor switch (N7) which is operated by said control means together with said fourth transistor switch (N8) when a second predetermined line condition (ground signalling condition) has to be realised.

**17.** Polarity reversal circuit according to claim 15, characterized in that said junction point is coupled to a third reference voltage (VEET) through the collector-to-emitter path of a sixth transistor (N3) and a fourth resistance (R24 + R25) having a value equal to that of said third resistance (R23), said sixth transistor (N3) forming with said fourth transistor (P1) a circuit which ensures that in said fourth resistance (R24 + R25) substantially the same current flows as in said second resistance, and that the base of said sixth transistor (N3) is coupled to said second intermediate output (VLO) via the base-to-emitter junction of a seventh transistor (N5).

**18.** Polarity reversal circuit according to claim 17, characterized in that the base-to-emitter junction of said sixth transistor (N3) is connected to said fourth resistance (R24 + R25) through the base-to-emitter junction of a second diode connected transistor (N6).

**19.** Polarity reversal circuit according to claim 17, characterized in that said fourth resistance (R24 + R25) constitutes the series branch of a first filter having a shunt branch constituted by a first capacitance (C2) connected to a tapping point of said fourth resistance.

**20.** Polarity reversal circuit according to claim 15, characterized in that said second resistance (R21) forms part of the series branch of a second filter having a shunt branch constituted by a second capacitance (C1).

**21.** Polarity reversal circuit according to claim 15, characterized in that said bias selection means include an operational amplifier (OA2) whose non-inverting input is able to be connected to a selected one of a pluarlity of bias voltages (MBV, HBV, SBV, RBV) and whose output controls a Darlington amplifier (W1, W2) which is branched in series with said second resistance (R21) and a fifth resistance (R20).

**22.** Polarity reversal circuit according to claim 21, characterized in that said bias voltages are low when compared with said reference voltages.

## Revendications

**1.** Circuit d'inversion de polarité pour inverser la polarité d'un premier (LI0) et d'un second (LI1) conducteurs d'une ligne de télécommunication, ledit circuit comportant un circuit de référence présentant au moins une sortie de commande de référence (JP1, JP2) qui est couplée, par l'intermédiaire de moyens d'ouverture de porte commandés, à au moins une sortie de signal (VTI, VRI) dudit circuit d'inversion de polarité, ladite sortie de signal étant couplée à ladite ligne de télécommunication, des moyens étant prévus pour générer une tension de référence (v + - x, VEET + x) par l'intermédiaire de jonctions base-émetteur de transistor polarisées dans le sens direct (P1, N4, P6, N17, N15, N16; N6, N3, N5, P7, N17, N15, N16), circuit caractérisé par le fait que ladite tension de référence (V + - x, VEET + x) est amenée sur ladite sortie de référence (JP1, JP2), qui est couplée à ladite sortie de signal (VTI, VRI), par l'intermédiaire desdites jonctions base-émetteur de transistor polarisées dans le sens direct (P1, N4, P6, N17, N15, N16; N6, N3, N5, P7, N17, N15, N16) de transistors bipolaires en série avec une résistance de compensation, la valeur de l'intensité constante prédéterminée qui passe dans ladite résistance et la valeur de la résistance étant choisies de façon telle que la chute de tension résultante dans ladite résistance compense les chutes de tension dans lesdites jonctions pour donner à ladite sortie de signal une tension de sortie exactement égale à ladite tension de référence.

**2.** Circuit d'inversion de polarité selon la revendication 1, caractérisé par le fait qu'il comporte des moyens de production d'intensité produisant une intensité constante dans ladite résistance de compensation (R26, R36).

**3.** Circuit d'inversion de polarité selon la revendication 1, caractérisé par le fait que ledit circuit de référence comporte une première (JPI) et une seconde (JP2) sorties de référence sur lesquelles, respectivement, sont amenées une première (V + - x) et une seconde (VEET + x) tensions de référence et qui sont couplées, par l'intermédiaire, respectivement, d'un premier (P1, N4) et d'un second (N6, N3, N5) ensembles desdites jonctions polarisées dans le sens direct, à, respectivement, une première (VHI) et une seconde (VLO) bornes intermédiaires sur lesquelles une première (VHI) et une seconde (VLO) tensions intermédiaires sont respectivement amenées et qui sont couplées à la première et à la seconde entrées desdits moyens d'ouverture de porte présentant lesdites sorties (VTI, VRI), du circuit de polarité, ladite première et ladite seconde entrées des moyens d'ouverture de porte étant couplées à ladite sortie de signal par l'intermédiaire, respectivement, d'un troisième (P6, N17, N15, N16) et d'un quatrième (P7, N17, N15, N16) ensembles desdites jonctions polarisées dans le sens direct.

4. Circuit d'inversion de polarité selon la revendication 3, caractérisé par le fait qu'il comporte des premiers (P6, P7) et des seconds (P'6, P'7) moyens d'ouverture de porte présentant une première (VTI) et une seconde (VRI) sorties de signal couplées audit premier (LI0) et audit second (LI1) conducteurs de ligne, respectivement.

5. Circuit d'inversion de polarité selon la revendication 3, caractérisé par le fait que lesdits moyens d'ouverture de porte comportent un premier (P6) et un second (P7) transistors dont les bases constituent ladite première et ladite seconde entrées des moyens d'ouverture de porte, respectivement, et dont les chemins émetteur-collecteur sont couplés entre lesdites sorties de signal (VTI, VRI) et une tension d'alimentation (V-) en série avec portion commune (N17, N15, N16) dudit troisième (P6, N17, N15, N16) et dudit quatrième (P7, N17, N15, N16) ensembles de jonctions polarisées dans le sens direct.

6. Circuit d'inversion de polarité selon la revendication 5, caractérisé par le fait que ladite première (VHI) et ladite seconde (VLO) bornes intermédiaires sont couplées, à ladite première entrée des moyens d'ouverture de porte, directement, et, à ladite seconde entrée des moyens d'ouverture de porte, par l'intermédiaire d'un premier transistor de commutation commandé (N18), respectivement, de sorte que, lorsque ledit premier transistor de commutation (N18) est rendu conducteur par les moyens de commande, ledit premier transistor (P6) est non conducteur et ledit second transistor (P7) est conducteur, reliant ainsi ladite seconde tension intermédiaire (VLO) à ladite sortie de signal (VTI, VRI), tandis que, lorsque ledit premier transistor de commutation (N18) est rendu non conducteur par lesdits moyens de commande, ledit premier transistor (P6) est conducteur, reliant ainsi ladite première tension intermédiaire (VHI) à ladite sortie de signal.

7. Circuit d'inversion de polarité selon la revendication 6, caractérisé par le fait que ledit premier transistor de commutation est constitué par un troisième transistor (N18) dont le chemin collecteur-émetteur est couplé entre ladite seconde entrée des moyens d'ouverture de porte et ladite seconde borne de sortie intermédiaire (VLO) et dont la base est couplée au point de jonction d'une première source d'intensité constante (P5) et d'un second transistor de commutation commandé (N14) qui, lorsqu'il est rendu conducteur par lesdits moyens de commande, empêche que ledit troisième transistor (N18) soit rendu conducteur, et, lorsqu'il est rendu non conducteur par lesdits moyens de commande, permet que ledit troisième transistor (N18) soit saturé par ladite première source d'intensité (P5), ledit troisième transistor appliquant alors ladite seconde tension intermédiaire (VLO) à ladite seconde entrée des moyens d'ouverture de porte.

8. Circuit d'inversion de polarité selon la revendication 7, caractérisé par le fait que l'émetteur et la base dudit troisième transistor (N18) sont interconnectés par une résistance (R39).

9. Circuit d'inversion de polarité selon la revendication 7, caractérisé par le fait que ledit second transistor de commutation est constitué par une seconde source d'intensité commandée (N14).

10. Circuit d'inversion de polarité selon les revendications 2 et 5, caractérisé par le fait qu'une première dite résistance de compensation (R36) est reliée en série avec une portion individuelle dudit troisième ensemble de diodes polarisées dans le sens direct, une intensité constante étant fournie à ladite première résistance de compensation (R36) par l'intermédiaire d'une troisième source d'intensité constante (P4) qui constitue ledit moyen de production d'intensité.

11. Circuit d'inversion de polarité selon la revendication 10, caractérisé par le fait que ladite troisième source d'intensité constante (P4) est couplée aux chemins émetteur-collecteur dudit premier (P6) et dudit second (P7) transistors par l'intermédiaire d'un transistor (N17) monté en diode, le point de jonction de ladite troisième source d'intensité constante (P4) et dudit transistor (N17) monté en diode étant relié à ladite sortie de circuit (VTI) par l'intermédiaire d'un montage Darlington (N15, N16).

EP 0 241 604 B1

**12.** Circuit d'inversion de polarité selon la revendication 7, caractérisé par le fait qu'une seconde dite résistance de compensation (26) est reliée en série avec le chemin collecteur-émetteur dudit troisième transistor (N18).

**13.** Circuit d'inversion de polarité selon les revendications 4 et 12, caractérisé par le fait que la seconde résistance de compensation (R26) est commune auxdits premiers (P6, P7) et auxdits seconds (P'6, P'7) moyens d'ouverture de porte.

**14.** Circuit d'inversion de polarité selon la revendication 7, caractérisé par le fait que la base dudit second transistor (P7) est reliée au point de jonction d'une quatrième source d'intensité constante (P9) et d'un troisième transistor de commutation commandé (N13) qui est rendu conducteur et non conducteur en même temps que ledit second transistor de commutation (N14) par lesdits moyens de commande lorsqu'une première condition prédéterminée concernant la ligne (condition d'inversion) doit être réalisée.

**15.** Circuit d'inversion de polarité selon la revendication 1, caractérisé par le fait que ledit circuit de référence comporte un diviseur de tension à résistances (R20, R21, R22) qui est couplé avec un moyen (OA2) de sélection de polarisation de façon à assurer le passage, dans ce moyen, de l'intensité sélectionnée, une seconde résistance (R21) dudit diviseur de tension étant shuntée par la liaison de série d'une troisième résistance (R23) et de la jonction émetteur-base d'un quatrième transistor (P1) à la base duquel est appliquée ladite première tension de référence (V + - x), et par le fait que le point de jonction de ladite seconde résistance (21) et de ladite jonction émetteur-base dudit quatrième transistor (P1) est couplé à ladite seconde sortie intermédiaire (VLO) par l'intermédiaire de la jonction base-émetteur d'un cinquième transistor (N4) dont le chemin collecteur-émetteur est relié à une tension d'alimentation (V-) par l'intermédiaire d'un quatrième transistor de commutation (N8) que lesdits moyens de commande rendent continuellement conducteur.

**16.** Circuit d'inversion de polarité selon les revendications 4 et 15, caractérisé par le fait que les points de jonction des chemins collecteur-émetteur desdits troisièmes transistors (N18, N' 18) desdits premiers et desdits seconds moyens d ouverture de porte sont couplés à une tension d'alimentation (V-) par l'intermédiaire d'un cinquième transistor de commutation (N7) que lesdits moyens de commande rendent conducteur en même temps que ledit quatrième transistor de commutation (N8) lorsqu'une seconde condition prédéterminée concernant la ligne (condition d'envoi d'un signal par mise à la masse) doit être réalisée.

**17.** Circuit d'inversion de polarité selon la revendication 15, caractérisé par le fait que ledit point de jonction est couplé à ne troisième tension de référence (VEET) par l'intermédiaire du chemin collecteur-émetteur d'un sixième transistor (23) et d'une quatrième résistance (R24 + R25) ayant une valeur égale à celle de ladite troisième résistance (R23), ledit sixième transistor (N3) formant, avec ledit quatrième transistor (P1), un circuit qui assure que, dans ladite quatrième résistance (R24 + R25), passe substantiellement la même intensité que dans ladite seconde résistance, et par le fait que la base dudit sixième transistor (N3) est couplée à ladite seconde sortie intermédiaire (VLO) par l'intermédiaire de la jonction base-émetteur d un septième transistor (N5).

**18.** Circuit d'inversion de polarité selon la revendication 17, caractérisé par le fait que la jonction base-émetteur dudit sixième transistor (N3) est reliée à ladite quatrième résistance (R24 + R25) par l'intermédiaire de la jonction base-émetteur d'un second transistor (N6) monté en diode.

**19.** Circuit d'inversion de polarité selon la revendication 17, caractérisé par le fait que ladite quatrième résistance (R24 + R25) constitue le branchement en série d'un premier filtre comportant un branchement de shunt constitué par une première capacité (C2) reliée à un point de prélèvement de ladite quatrième résistance.

**20.** Circuit d'inversion de polarité selon la revendication 15, caractérisé par le fait que ladite seconde résistance (R21) forme une portion du branchement de série d'un second filtre comportant un branchement de shunt constitué par une seconde capacité (C1).

**21.** Circuit d'inversion de polarité selon la revendication 15, caractérisé par le fait que lesdits moyens de

14

sélection de polarisation comportent un amplificateur opérationnel (OA2) dont l'entrée non inverseuse peut être reliée à l'une, sélectionnée, d'une pluralité de tensions de polarisation (MBV, HBV, SBV, RBV) et dont la sortie commande un montage Darlington (W1, W2) qui est branché en série avec ladite seconde résistance (R21) et une cinquième résistance (R20).

22. Circuit d'inversion de polarité selon la revendication 21, caractérisé par le fait que lesdites tensions de polarité sont faibles en comparaison desdites tensions de référence.

**Patentansprüche**

1. Polaritätsumkehrschaltung zur Umkehr der Polarität der Spannung zwischen einem ersten (LI0) und einem zweiten (LI1) Leiter einer Teilnehmeranschlußleitung, wobei diese Polaritätsumkehrschaltung eine Schaltung zur Erzeugnung einer Bezugsspannung mit mindestens einem Steuerausgang (JP1, JP2) enthält, der über elektronische Schalter zu mindestens einem Signalausgang (VTI, VRI) der Polaritätsumkehrschaltung führt und dieser Signalausgang mit der Teilnehmeranschlußleitung verbunden ist und Schaltungsanordnungen vorgesehen sind, um eine Bezugsspannung (V + - x, VEET + x) mittels in Durchlaßrichtung betriebener Basis-Emitter-Strecken (P1, N4, P6, N17, N15, N16; N6, N3, N5, P7, N17, N15, N16) zu erzeugen,
**dadurch gekennzeichnet,**
daß die Bezugsspannung (V + - x , VEET + x) an dem Steuerausgang (JP1, JP2) entsteht, der über eine Reihenschaltung aus in Durchlaßrichtung betriebener Basis-Emitter-Strecken (P1, N4, P6, N17, N15, N16; N6, N3, N5, P7, N17, N15, N16) bipolarer Transistoren und einem Kompensationswiderstand mit dem Signalausgang (VTI, VRI) verbunden ist, wobei ein definierter konstanter Strom durch den Kompensationswiderstand fließt und der Widerstandswert so gewählt wird, daß der Spannungsabfall über den Basis-Emitter-Strecken kompensiert wird, so daß an dem Signalausgang eine Spannung entsteht, die genau gleich der Bezugsspannung ist.

2. Polaritätsumkehrschaltung nach Anspruch 1, dadurch gekennzeichnet, daß sie Schaltungsanordnungen enthält, die einen konstanten Strom durch den Kompensationswiderstand (R26, R36) erzeugen.

3. Polaritätsumkehrschaltung nach Anspruch 1, dadurch gekennzeichnet, daß die Schaltung zur Erzeugung einer Bezugsspannung einen ersten (JP1) und einen zweiten (JP2) Steuerausgang hat, an dem jeweils eine erste (V + - x) und eine zweite (VEET + x) Bezugsspannung entsteht und der jeweils über eine erste Menge (P1, N4) und eine zweite Menge (N6, N3, N5) in Durchlaßrichtung betriebener Sperrschichten mit einem jeweils ersten (VHI) und einem zweiten (VLO) Anschluß verbunden ist, an denen jeweils Zwischenspannungen entstehen und die weiterverbunden werden mit einem ersten und einem zweiten Eingang der elektronischen Schalter, deren Ausgänge Signalausgänge (VTI, VRI) der Polaritätsumkehrschaltung sind, und daß der erste und zweite Eingang der elektronischen Schalter mit den Signalausgängen (VTI, VRI) der Polaritätsumkehrschaltung über eine dritte Menge (P6, N17, N15, N16) und eine vierte Menge (P7, N17, N15, N16) in Durchlaßrichtung betriebener Sperrschichten verbunden ist.

4. Polaritätsumkehrschaltung nach Anspruch 3, dadurch gekennzeichnet, daß sie erste (P6, P7) und zweite (P'6, P'7) elektronische Schalter mit einem ersten (VTI) und einem zweiten (VRI) Signalausgang enthält, die mit dem jeweiligen ersten (LI0) und zweiten (LI1) Leiter der Teilnehmeranschlußleitung verbunden sind.

5. Polaritätsumkehrschaltung nach Anspruch 3, dadurch gekennzeichnet, daß der elektronische Schalter einen ersten (P6) und einen zweiten (P7) Transistor enthält, deren Basisanschlüsse jeweils einen ersten und einen zweiten Eingang bilden und deren in Reihe mit dem jeweils gemeinsamen Teil (N17, N15, N16) der dritten (P6, N17, N15, N16) und der vierten (P7, N17, N15, N16) Menge der in Durchlaßrichtung betriebenen Sperrschichten geschalteten Emitter-Kollektor-Strecken zwischen einer Versorgungsspannung (v-) und dem Signalausgang (VTI, VRI) der Polaritätsumkehrschaltung liegen.

6. Polaritätsumkehrschaltung nach Anspruch 5, dadurch gekennzeichnet, daß der erste (VHI) Anschluß, an dem eine Zwischenspannung entsteht, direkt mit dem ersten Eingang des elektronischen Schalters verbunden ist und daß der zweite (VLO) Anschluß, an dem eine Zwischenspannung entsteht, über einen ersten Transistorschalter (N18) mit dem zweiten Eingang des elektronischen Schalters verbunden ist, so daß bei leitendem erstem Transistorschalter (N18) der erste Transistor (P6) des elektronischen Schalters gesperrt und der zweite Transistor (P7) des elektronischen Schalters leitend (VLO) ist und dadurch die zweite Zwischenspannung an den Signalausgang (VTI, VRI) durchgeschaltet wird und daß bei gesperrtem ersten Transistorschalter (N18) der erste Transistor (P6) des elektronischen Schalters leitend ist und dadurch die erste Zwischenspannung (VHI) an den Signalausgang durchgeschaltet wird.

7. Polaritätsumkehrschaltung nach Anspruch 6, dadurch gekennzeichnet, daß der erste Transistorschalter von einem dritten Transistor (N18) gebildet wird, dessen Kollektor-Emitter-Strecke zwischen dem zweiten Eingang des elektronischen Schalters und dem zweiten Ausgang (VLO), an dem eine Zwischenspannung entsteht, geschaltet ist und dessen Basis mit einer ersten Konstantstromquelle (P5) verbunden ist, und daß ein zweiter Transistorschalter (N14), wenn er durch die Steuerschaltung geöffnet wird, den dritten Transistor (N18) sperrt und dieser dann von der ersten Konstantstromquelle (P5) in die Sättigung getrieben wird und die zweite Zwischenspannung (VLO) somit an den zweiten Eingang des elektronischen Schalters gelangt.

8. Polaritätsumkehrschaltung nach Anspruch 7, dadurch gekennzeichnet, daß Emitter und Basis des dritten Transistors (N18) über einen Widerstand (R39) miteinander verbunden sind.

9. Polaritätsumkehrschaltung nach Anspruch 7, dadurch gekennzeichnet, daß der zweite Transistorschalter von einer geregelten zweiten Stromquelle (N14) gebildet wird.

10. Polaritätsumkehrschaltung nach den Ansprüchen 2 und 5, dadurch gekennzeichnet, daß ein erster Kompensationswiderstand (R36) mit einer aus der dritten Menge in Durchlaßrichtung betriebener Diodenstrecken in Reihe geschaltet ist, wobei der Kompensationswiderstand (R36) von einem konstanten Strom aus einer dritten Konstantstromquelle (P4) durchflossen wird, die die Schaltung zur Erzeugung eines konstanten Stroms bildet.

11. Polaritätsumkehrschaltung nach Anspruch 10, dadurch gekennzeichnet, daß die dritte Konstantstromquelle (P4) über einen als Diode geschalteten Transistor (N17) mit der jeweiligen Emitter-Kollektor-Strecke des ersten (P6) und zweiten (P7) Transistors verbunden ist und daß die dritte Konstantstromquelle (P4) und der als Diode geschaltete Transistor (N17) über eine Darlington-Schaltung (N15, N16) an den Signalausgang (VTI) der Polaritätsumkehrschaltung geschaltet sind.

12. Polaritätsumkehrschaltung nach Anspruch 7, dadurch gekennzeichnet, daß ein zweiter Kompensationswiderstand (R26) in Reihe mit der Kollektor-Emitter-Strecke des dritten Transistors (N18) geschaltet ist.

13. Polaritätsumkehrschaltung nach den Ansprüchen 4 und 12, dadurch gekennzeichnet, daß der zweite Kompensationswiderstand (R26) sowohl zum ersten (P6, P7) als auch zum zweiten (P'6, P'7) elektronischen Schalter gehört.

14. Polaritätsumkehrschaltung nach Anspruch 7, dadurch gekennzeichnet, daß die Basis des zweiten Transistors (P7) mit einer vierten Konstantstromquelle (P9) verbunden ist und daß ein dritter Transistorschalter (N13), der gemeinsam mit dem zweiten Transistorschalter (N14) durch die Steuerschaltung geöffnet und geschlossen wird, wenn eine erste festgelegte Leitungsbedingung (Umpolung) hergestellt werden soll.

15. Polaritätsumkehrschaltung nach Anspruch 1, dadurch gekennzeichnet, daß die Schaltung zur Erzeugung einer Bezugsspannung einen Spannungsteiler (R20, R21, R22) enthält, der mit einer Auswahlschaltung für unterschiedliche Vorspannungen (OA2) verbunden ist, die einen bestimmten Stromfluß durch den Spannungsteiler (R20, R21, R22) sichert, daß zu einem zweiten Widerstand (R21) des Spannungsteilers eine Reihenschaltung aus einem dritten Widerstand (R23) und der Emitter-Basis-Strecke eines vierten Transistors (P1) parallel geschaltet ist, wobei an die Basis des vierten Transistors (P1) die erste Bezugsspannung (V + - x) angelegt wird und daß der Verbindungspunkt zwischem zweitem Widerstand (R21) und Emitter-Basis-Strecke des vierten Transistors (P1) über die Basis-Emitter-Strecke eines fünften Transistors (N4) an den zweiten Anschluß (VLO), an dem eine Zwischenspannung entsteht, geschaltet ist und die Kollektor-Emitter-Strecke des fünften Transistors (N4) über einen vierten Transistorschalter (N8) mit einer Versorgungsspannung (V-) verbunden ist, wobei der vierte Transistorschalter (N8) durch die Steuerschaltung ständig geöffnet wird.

**16.** Polaritätsumkehrschaltung nach den Ansprüchen 4 und 15, dadurch gekennzeichnet, daß der Verbindungspunkt der Kollektor-Emitter-Strecken der zum ersten beziehungsweise zum zweiten elektronischen Schalter gehörenden dritten Transistoren (N18, N' 18) über einen fünften Transistorschalter (N7) mit einer Versorgungsspannung (V-) verbunden ist und der fünfte Transistorschalter (N7) zusammen mit dem vierten Transistorschalter (N8) durch die Steuerschaltung angesteuert wird, wenn eine zweite festgelegte Leitungsbedingung (Grundzustand) hergestellt werden soll.

**17.** Polaritätsumkehrschaltung nach Anspruch 15, dadurch gekennzeichnet, daß der Verbindungspunkt zwischen zweitem Widerstand (R21) und Emitter-Basis-Strecke des vierten Transistors (P1) über die Kollektor-Emitter-Strecke eines sechsten Transistors (N3) und einem vierten Widerstand (R24 + R25), der den gleichen Widerstandswert wie der dritte Widerstand (R23) hat, mit einer dritten Bezugsspannung (VEET) verbunden ist und daß der sechste Transistor (N3) mit dem vierten Transistor (P1) eine Schaltungsanordnung bildet, die sicherstellt, daß durch den vierten Widerstand (R24 + R25) im wesentlichen der gleiche Strom fließt wie in dem zweiten Widerstand und daß die Basis des sechsten Transistors (N3) über die Basis-Emitter-Strecke eines siebenten Transistors (N5) mit dem zweiten Anschlußpunkt (VLO), an dem eine Zwischenspannung entsteht, verbunden ist.

**18.** Polaritätsumkehrschaltung nach Anspruch 17, dadurch gekennzeichnet, daß die Basis-Emitter-Strecke des sechsten Transistors (N3) über die Basis-Emitter-Strecke eines zweiten als Diode geschalteten Transistors (N6) mit dem vierten Widerstand (R24 + R25) verbunden ist.

**19.** Polaritätsumkehrschaltung nach Anspruch 17, dadurch gekennzeichnet, daß der vierte Widerstand (R24 + R25) den Längszweig eines Filters bildet, dessen Querzweig an einem Abgriff des Widerstandes von einem ersten Kondensator gebildet wird.

**20.** Polaritätsumkehrschaltung nach Anspruch 15, dadurch gekennzeichnet, daß der zweite Widerstand (R21) einen Teil eines Längszweiges eines zweiten Filters bildet, dessen Querzweig von einem zweiten Kondensator (C1) gebildet wird.

**21.** Polaritätsumkehrshaltung nach Anspruch 15, dadurch gekennzeichnet, daß die Auswahlschaltung für unterschiedliche Vorspannungen einen Operationsverstärker (OA2) enthält, dessen nichtinvertierender Eingang mit einer aus einer Mehrzahl von Vorspannungen (MBV, HBV, SBV, RBV) ausgewählten Vorspannung verbunden werden kann und dessen Ausgangssignal eine Darlingtonschaltung (W1, W2) ansteuert, die in Reihe mit dem zweiten Widerstand (R21) und einem fünften Widerstand (R20) liegt.

**22.** Polaritätsumkehrschaltung nach Anspruch 21, dadurch gekennzeichnet, daß die Vorspannungen kleiner als die Bezugsspannungen sind.

FIG.1

EP 0 241 604 B1

FIG.2

EP 0 241 604 B1

FIG.3